# EUROPEAN PATENT APPLICATION

(11) **EP 3 483 910 A1**
(43) Date of publication of application: **15.05.2019**
(21) Application number: 18206038.4
(22) Date of filing: 13.11.2018
(51) Int. Cl.: H01H 3/58, H01H 3/22, F16D 15/00

(54) **CLUTCH MECHANISM AND AUTOMATIC TRANSFER SWITCHING EQUIPMENT INCLUDING THE SAME**

(30) Priority: 13.11.2017 CN 201721511533 U
(71) Applicant: Schneider Electric Industries SAS, 92500 Rueil Malmaison (FR)
(72) Inventor: LIU, Zhenzhong, Shanghai 201203 (CN); ABADIE, Michel, Shanghai 201203 (CN); ZHANG, Kunpeng, Shanghai 201203 (CN); ZENG, Xiaojing, Shanghai 201203 (CN); YU, Gang, Shanghai 201203 (CN)
(74) Representative: Manitz Finsterwald Patent- und Rechtsanwaltspartnerschaft mbB

(57) **Abstract**

A clutch mechanism for automatic transfer switching equipment includes a main switch spindle, a manual operating mechanism spindle, and a separation actuation component. The main switch spindle includes a first moving component. The manual operating mechanism spindle includes a second moving component. When the first moving component of the main switch spindle engages the manual operating mechanism spindle, the manual operating mechanism spindle rotates with the main switch spindle. When the separation actuation component actuates the second moving component to separate the first moving component from the manual operating mechanism spindle, the manual operating mechanism spindle disengages from the main switch spindle, and the manual operating mechanism spindle and the main switch spindle rotate freely relative to each other. An automatic transfer switching equipment including the clutch mechanism is also provided.

## Description

### FIELD OF THE INVENTION

The present invention relates to a clutch mechanism, and further relates to an automatic transfer switching equipment including the clutch mechanism.

### BACKGROUND OF THE INVENTION

The electrical lifespan of the automatic transfer switching equipment (ATSE) is one of electrical performance indicators that is of particular concern to customers and is in close relation with the mechanical structure of switch. Due to limitations from various aspects, mechanism parameters of switch can hardly be used to improve the electrical performance indicators. For instance, it is particularly difficult to optimize the opening/closing speed of contacts in existing mechanisms. In the example of commonly used electromagnetic driven mechanisms, the electromagnetic force is so small when the contact is opened that the opening speed is low. Parameters for electromagnetic-driven ATSE electrical operating system are optimized through assisting spring force and some mechanism structures intended for such purpose.

Unmanned operation driven by a spring whose stored energy is beyond the dead point is preferred due to its better operation safety, but the associated structure does not accommodate to the electrical operation stated above. In other words, it restricts optimization for parameters of electrical operation mechanisms. Fortunately, the two types of operation will not take place at the same time.

Therefore, a clutch mechanism is desired that allows the ATSE in its automatic operation mode to separate from unrelated manual operating mechanisms, and thus enables the ATSE to possess both superior mechanical and electrical performances.

### BRIEF SUMMARY OF THE INVENTION

According to one aspect of the present invention, a clutch mechanism for automatic transfer switching equipment is provided. The clutch mechanism includes a main switch spindle, a manual operating mechanism spindle, and a separation actuation component. The main switch spindle includes a first moving component. The manual operating mechanism spindle includes a second moving component. When the first moving component of the main switch spindle engages the manual operating mechanism spindle, the manual operating mechanism spindle rotates with the main switch spindle. When separation actuation component actuates the second moving component in order to separate the first moving component from the manual operating mechanism spindle 2, the manual operating mechanism spindle disengages from the main switch spindle.The manual operating mechanism spindle and the main switch spindle rotate freely relative to each other.

According to the aspect described above, the manual operating mechanism spindle shares the same rotation axis with the main switch spindle. A second receiving space is arranged in the manual operating mechanism spindle to receive the second moving component. A first receiving space is arranged in the main switch spindle to receive the first moving component. An elastic component is disposed in the first receiving space to exert a force on the first moving component toward the manual operating mechanism spindle.

According to the description above, when the manual operating mechanism spindle rotates so that the second receiving space is aligned with the first receiving space, the first moving component, as a result of the force produced by the elastic component, enables part of the first moving component to enter the second receiving space, and to push the second moving component until part of the second moving component leaves the second receiving space and gets in contact with the separation actuation component. The manual operating mechanism spindle and the main switch spindle 1 engage and rotate together.

According to the description above, the separation actuation component includes an inclined portion. When the second and the first receiving spaces align with each other, movement of the separation actuation component enables the inclined portion to push the second moving component, and movement of the second moving component pushes the first moving component. When the first moving component is within the first receiving space in its entirety, and the second moving component is within the second receiving space in its entirety, the manual operating mechanism spindle disengages from the main switch spindle. The manual operating mechanism spindle and the main switch spindle rotate freely in relation to each other. Meanwhile, because the main switch spindle does not need to lead the rotation of the manual operating mechanism spindle, mechanical performance of the main switch spindle is enhanced.

According to another aspect of the present invention, an automatic transfer switching equipment including the clutch mechanism described above is provided.

The clutch mechanism of the present invention allows the ATSE, in its automatic operation, to separate from unmanned operation mechanism, and thus enables the ATSE to possess both superior mechanical and electrical performance.

So far, for better understanding the detailed description of the present invention, and for better recognizing the contribution of the present invention to the prior art, a rather complete disclosure of the present invention has been made. And the embodiments of the present invention will be further described in detail below and constitute the subject matter of the attached claims.

Also, the persons having ordinary skills in the art will recognizes that the underlying idea of the present invention may easily be used as principles in designing other structures, methods, and systems, and be used to effectuate several objectives of the present invention. Therefore and importantly, the claims shall be construed to include equivalents of the present invention, so long as they do not depart its essence and scope.

### BRIEF DISCRIPTION OF THE DRAWINGS

The accompanying drawings allow the persons having ordinary skills in the art to have a better understanding of the present invention, and further show advantages of the present invention. It is intended that the accompanying drawings shall be interpreted as illustrative only and not as including all possible embodiments and limiting the scope of the present invention.
Figure 1 illustrates an axial cross-sectional view of the clutch mechanism according to the present invention;
Figure 2 illustrates a radial cross-sectional view of the clutch mechanism according to the present invention;
Figure 3 illustrates the status of the first receiving space aligning with the second receiving space;
Figure 4 illustrates that part of the first moving component enters the second receiving space, and pushes the second moving component until part of the second moving component leaves the second receiving space and gets in contact with the separation actuation component 3;
Figure 5 illustrates an axial cross-sectional view in the status stated in Figure 4;
Figures 6 and 7 illustrate that the main switch spindle starts disengaging from the manual operating mechanism spindle as a result of the actuation of the separation actuation component;
Figures 8 and 9 illustrate that the main switch spindle is completely disengaged from the manual operating mechanism spindle as a result of the actuation of the separation actuation component.

### DETAILED DESCRIPTION OF THE INVENTION

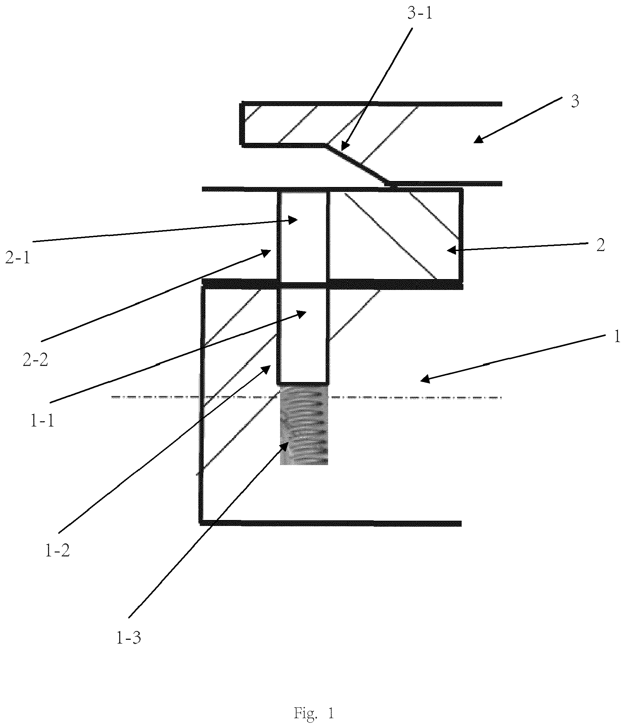

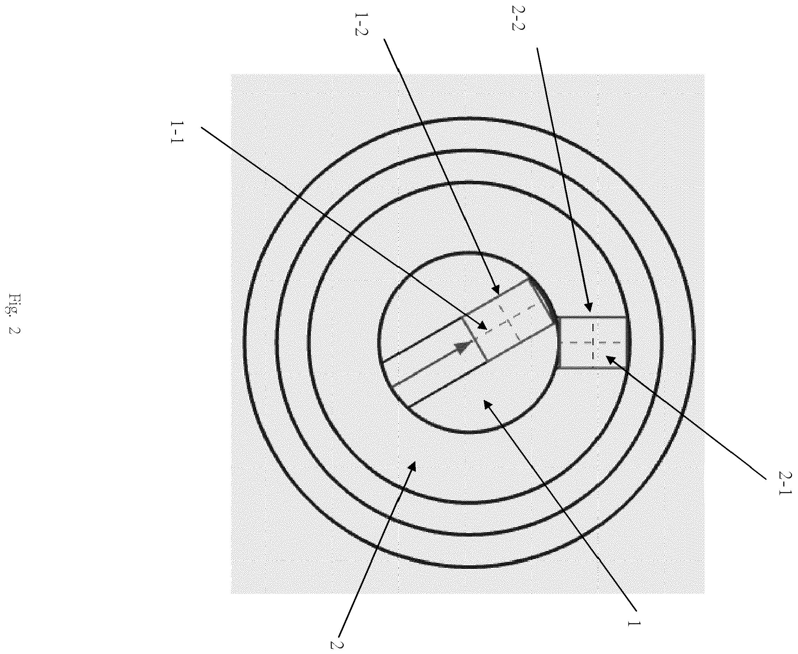

As illustrated in Figures 1 and 2, a clutch mechanism for automatic transfer switching equipment is provided that includes a main switch spindle 1, a manual operating mechanism spindle 2 and a separation actuation component 3. The main switch spindle 1 includes a first moving component 1-1. The manual operating mechanism spindle 2 includes a second moving component 2-1.

When the first moving component 1-1 of the main switch spindle 1 engages the manual operating mechanism spindle 2, the manual operating mechanism spindle 2 rotates with the main switch spindle 1.

When the separation actuation component 3 actuates the second moving component 2-1 to separate the first moving component 1-1 from the manual operating mechanism spindle 2, the manual operating mechanism spindle 2 disengages from the main switch spindle 1, the manual operating mechanism spindle 2 and the main switch spindle 1 rotate freely in relation to each other.

According to one embodiment of the present invention, the manual operating mechanism spindle 2 and the main switch spindle 1 are arranged with respect to a rotational axis.A second receiving space 2-2 is arranged in the manual operating mechanism spindle 2 to receive the second moving component 2-1. A first receiving space 1-2 is arranged in the main switch spindle 1 to receive the first moving component 1-1 .An elastic component 1-3 is disposed in the first receiving space 1-2 and exerts force on the first moving component 1-1 that towards the manual operating mechanism spindle 2. The elastic component 1-3 is a coil spring, for example.

According to the embodiment stated above, when the manual operating mechanism spindle 2 rotates so that the second receiving space 2-2 does not align with the first receiving space 1-2 (as illustrated in Figure 2),an end of the second moving component 2-1 abuts against the outer surface of the main switch spindle 1, and the second moving component 2-1 is within the second receiving space 2-2 in its entirety. Meanwhile, an end of the first moving component 1-1 abuts against the outer surface of the manual operating mechanism spindle2, and the first moving component 1-1 is within the first receiving space 1-2 in its entirety. At the same time, the elastic component 1-3 is under pressure so that it exerts elastic force on the first moving component 1-1 that towards the manual operating mechanism spindle 2. In this situation, the manual operating mechanism spindle 2 and the main switch spindle 1 rotate freely in relation to each other.

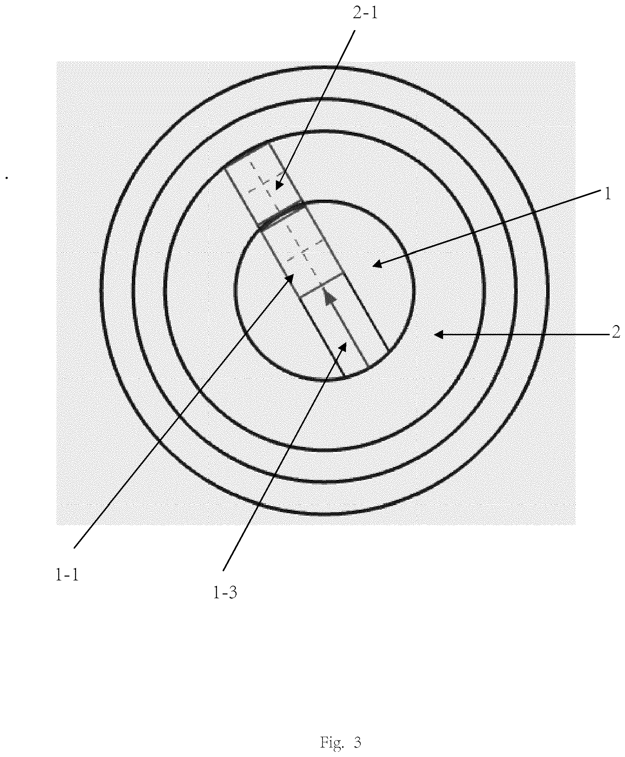

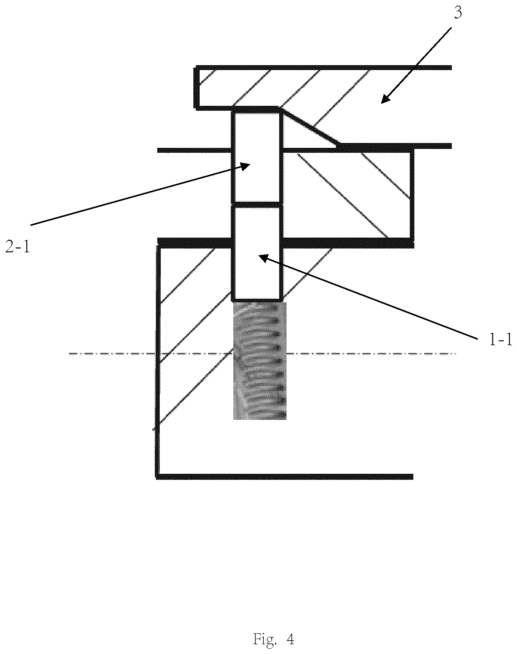

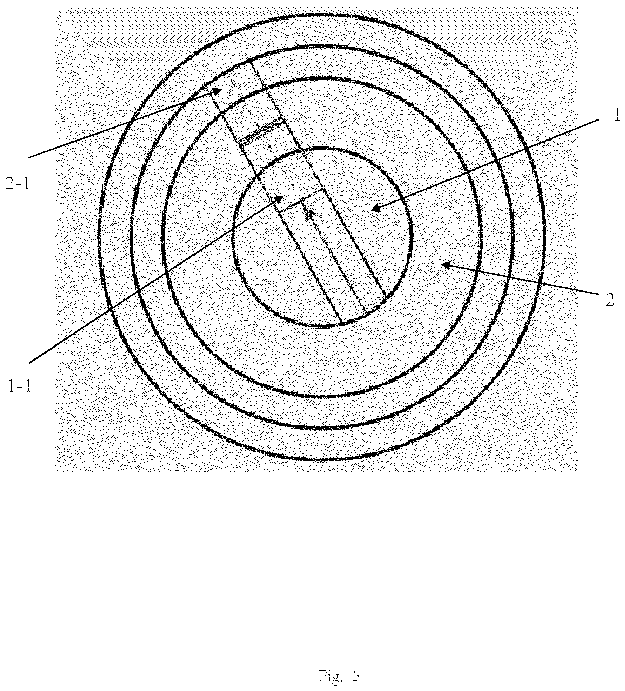

When the manual operating mechanism spindle 2 rotates so that the first receiving space aligns with the second receiving spaces (as illustrates in Figures 3-5), the elastic force of the elastic component 1-3 enables part of the first moving component 1-1 to enter the second receiving space 2-2, and to push the second moving component 2-1 until part of the second moving component 2-1 leaves the second receiving space 2-2 and gets in contact with the separation actuation component 3. At the same time, the manual operating mechanism spindle 2 and the main switch spindle rotate together.

According to the embodiment mentioned above, for the purpose of separating the manual operating mechanism spindle 2 from the main switch spindle 1 after their engagement, the separation actuation component includes an inclined portion 3-1.

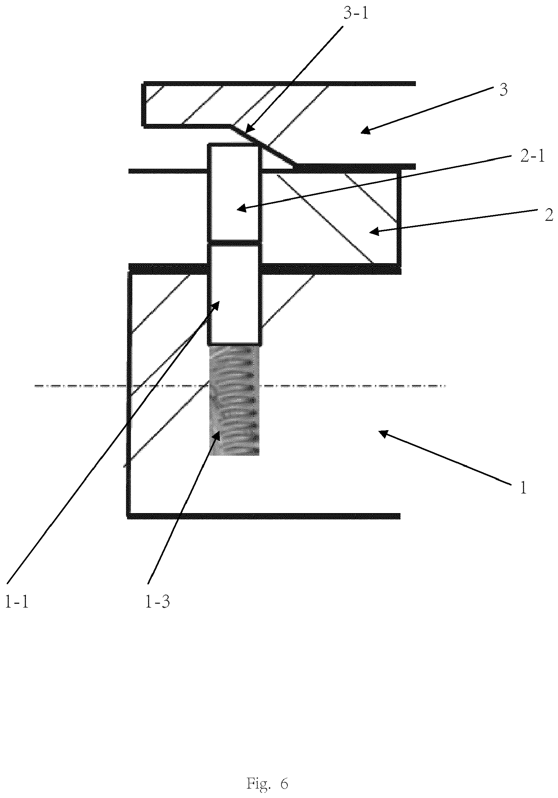

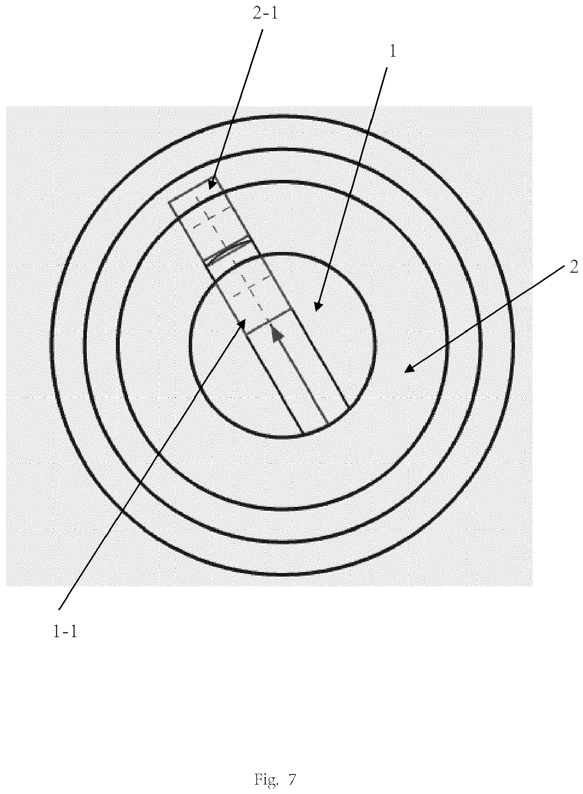

When the second receiving space 2-2 aligns with the first receiving space 1-2, movement of the separation actuation component 3 enables the inclined portion 3-1 to push the second moving component 2-1 (as illustrated in Figures 6 and 7), and movement of the second moving component 2-1 pushes the first moving component 1-1.

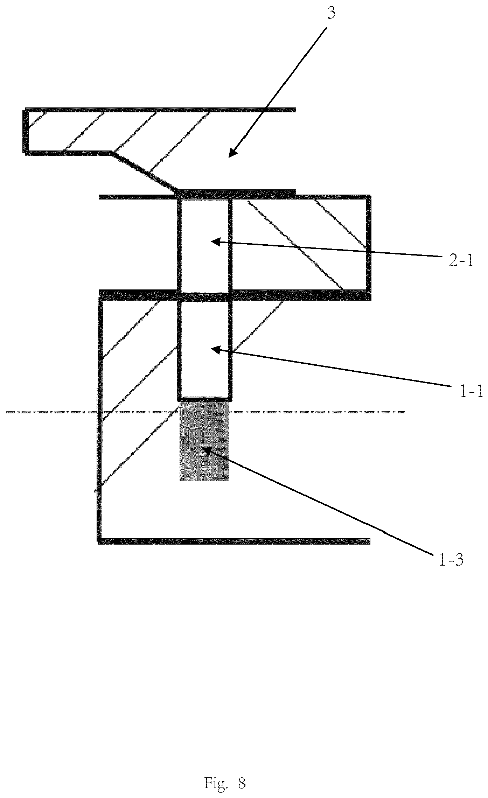

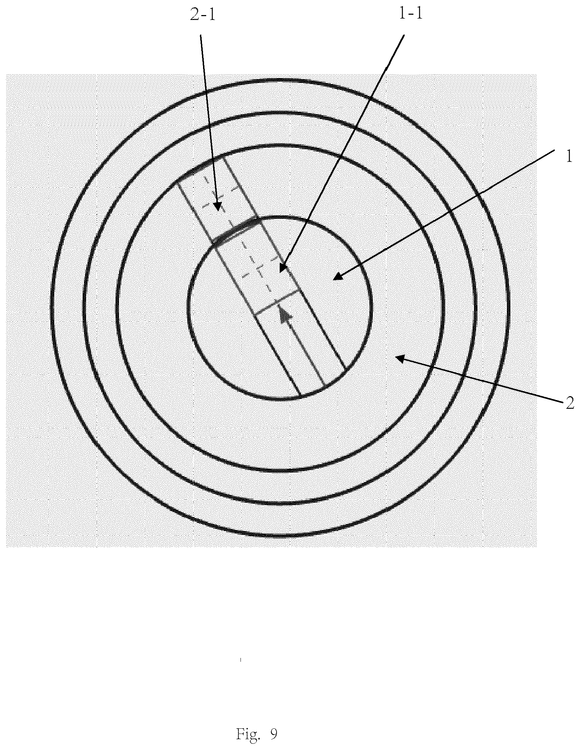

When the first moving component 1-1 is within the first receiving space 1-2 in its entirety, and the second moving component 2-1 is within the second receiving space 2-2 in its entirety (as illustrated in Figures 8 and 9), the second moving component 2-1 has already left the inclined portion 3-1, the manual operating mechanism spindle 2 disengages from the main switch spindle 1, and the manual operating mechanism spindle 2 and the main switch spindle 1 rotate freely in relation to each other.

According to another embodiment of the present invention, an automatic transfer switching equipment including the clutch mechanism described above is provided.

The clutch mechanism of the present invention allows the ATSE in its automatic operation mode to separate from unrelated manual operating mechanisms, and thus enables the ATSE to possess both superior mechanical and electrical performances.

While the present invention is described in the specification and accompanying drawings and with reference to the embodiments, it shall be understood that the persons having ordinary skills in the art may make various modifications and alternative designs to substitute many elements described above without departing the scope of the invention defined by the claims. In addition, combinations among the technical characteristics, elements and/or functions described in the embodiments are so clear that, upon the description of the present invention, the persons having ordinary skills in the art will recognize that the technical characteristics, elements and/or functions of one embodiment may be used in another embodiment, unless instructed otherwise. Furthermore, in accordance with the present invention and without departing the essence of the scope of the invention, various alterations may be made to adapt to special circumstances or materials. Therefore, the present invention shall be not construed to be limited in certain embodiments illustrated in the accompanying drawings or the best modes or embodiments of the invention described in the specification. Rather, the present invention includes all embodiments that are within the scope of the specification and attached claims.

## Claims

1. A clutch mechanism for automatic transfer switching equipment, **characterized in that**,
the clutch mechanism includes a main switch spindle (1), manual operating mechanism spindle (2), and separation actuation component (3);
the main switch spindle includes a first moving component (1-1);
the manual operating mechanism spindle (2) includes a second moving component (2-1);
when the first moving component (1-1) of the main switch spindle (1) engages the manual operating mechanism spindle (2), the manual operating mechanism spindle (2) rotates with the main switch spindle (1);
when the separation actuation component (3) actuates the second moving component (2-1) to separate the manual operating mechanism spindle (2) from the first moving component (1-1), the manual operating mechanism spindle (2) disengages from the main switch spindle (1) so that the manual operating mechanism spindle (2) rotate freely in relation to the main switch spindle (1).

2. The clutch mechanism of claim 1, **characterized in that**,
the main switch spindle (1) and the manual operating mechanisms spindle (2) are arranged with respect to a rotational axis;
a second receiving space (2-2) is arranged in the manual operating mechanism spindle (2) to receive the second moving component (2-1);
a first receiving space (1-2) is arranged in the main switch spindle (1) to receive the first moving component (1-1);
an elastic component (1-3) is disposed in the first receiving space (1-2) so that it exerts a force on the first moving component (1-1) toward the manual operating mechanisms spindle (2).

3. The clutch mechanism of claim 2, **characterized in that**,
when the manual operating mechanism spindle (2) rotates so that the first receiving space (1-2) is aligned with the second receiving space (2-2), part of the first moving component (1-1),due to the force of the elastic component (1-3), enters the second receiving space (2-2) and pushes the second moving component (2-1) until part of the second moving component (2-1) leaves the second receiving space (2-2) and comes in contact with the separation actuation component (3), and the manual operating mechanism spindle (2) engages and rotates with the main switch spindle (1) together.

4. The clutch mechanism of claim 3, **characterized in that**,
the separation actuation component (3) includes an inclined portion (3-1);
when the first receiving space (1-2) aligns with the second receiving space (2-2), movement of the separation actuation component (3) enables the inclined portion (3-1) to push the second moving component (2-1), and movement of the second moving component (2-1) pushes the first moving component (1-1);
when the second moving component (1-1) is within the first receiving space (1-2) in its entirety and the second moving component (2-1) is within the second receiving space (2-2) in its entirety, the manual operating mechanism spindle (2) disengages from the main switch spindle (1), and the manual operating mechanism spindle (2) and the main switch spindle (1) rotate freely in relation to each other.

5. An automatic transfer switching equipment, **characterized in that**, itincludes the clutch mechanism of any of the preceding claims.
